# EUROPEAN PATENT SPECIFICATION

(11) **EP 2 500 832 B1**
(45) Date of publication and mention of the grant of the patent: **25.07.2018**
(21) Application number: 11305278.1
(22) Date of filing: 15.03.2011
(51) Int. Cl.: G06F 17/30, H04L 29/08

(54) **Method and system for synchronization mechanism on multi-server reservation system**
Verfahren und System für Synchronisierungsmechanismus auf einem Reservierungssystem mit mehreren Servern
Procédé et système pour un mécanisme de synchronisation dans un système de réservation de serveurs multiples

(43) Date of publication of application: 19.09.2012
(73) Proprietor: Amadeus S.A.S., 06410 Biot (FR)
(72) Inventor: Masini, Vincent, 06250, Mougins (FR); Burdese, Samuel, 06110, Le Cannet (FR); Pavot, Marc, 06410, Biot (FR); Daniel, Jerome, 06130, Grasse (FR); Fauser, Dietmar, 06130, Grasse (FR)
(74) Representative: Samson & Partner Patentanwälte mbB

(56) References cited:
- EP-A1- 2 259 217
- WO-A1-00/63808
- US-A1- 2005 108 298

## Description

### Field of the invention

The present invention relates to the field of travel reservation systems, more particularly to a method and system for handling travel reservations on multiple servers using a distributed context synchronization mechanism.

### Background of the invention

Modern travel companies (e.g. airlines) usually employ sophisticated applications for handling reservation requests by customers. It is more and more frequent the case where more than one architecture is used throughout the company system. In such cases compatibility and synchronization issues should be taken into account when designing and planning the reservation system. An example is when part of the reservation management is performed on Internet based applications or communication infrastructures. Another example is when a system (not necessarily a reservation system) must be migrated from a legacy mainframe system (e.g. TPF) to a new system (e.g. an open system). We refer to this last example as a Decommissioning, i.e. when an application is to be migrated from e.g. a TPF mainframe to e.g. an open system. To avoid service interruption in the reservation system, it is advisable to perform this migration progressively, instead of closing down the existing system and switching to the new one in one single move, with all the possible problems which could arise: in addition to the complexity of a big activation procedure at the time of the switch between the old and new system, we should also consider the need of double maintenance of software on both platform, while the new system is under construction and the old one continues to evolve. Maybe new functionalities must be developed and this requires a double effort, while, if the two systems can work together, all development effort can be dedicated to the new platform. For these reasons, a progressive migration is preferable to a so called "big bang" migration strategy, however some difficulties must be considered. In particular, when the reservation services are distributed between two different platforms (e.g. mainframe and open platforms) they require sharing the same Passenger Name Record (PNR) contextual data in read and write mode to perform their business functionalities. One of the issues to be considered is the synchronization of data (e.g. PNR data) which are shared in read and write mode across different platforms and across protocols of communication (e.g. TPF mainframe and open systems) so that the systems can share the same up-to-date PNR context data. With "context" we mean the shopping session context which is linked to an active (end) user session. It represents all the functional and technical information that are used by the system for this specific user to perform the requested functionalities, e.g. in the travel reservation system, the reservation (shopping) session context which is linked to an active end user session.

US2005/108298 (IYENGAR ARUN K [US] ET AL IYENGAR ARUN KWANGIL [US] ET AL) 19 May 2005, describes a multi-server synchronization system that provides a solution to update multiple copies of the same object when the object is updated. However, the context of the last update does not include the server location where the update was made and more updates than necessary have to be made to maintain consistency.

EP2259217 (ACCENTURE GLOBAL SERVICES GMBH [CH]) 8 December 2010, describes batch synchronization of PNRs in travel reservation systems. However, a large overhead of resources is required to implement such a synchronization solution.

### Object of the invention

An object of the present invention is to alleviate at least some of the problems associated with the prior art systems.

The solution of the present invention is given by the subject-matter of claims. According to one aspect of the present invention there is provided a method for synchronization mechanism, in a reservation method operating on a multi-server system, for ensuring that the most up to date PNR record is used during a user transaction across at least two servers of the multi-server system, wherein a local context version of the PNR is maintained within each server of the multi server system, the servers being interconnected through a system bus, the mechanism including the steps of: maintaining in a shared context storage area, accessible by all servers of the multi-server system, information on the last updated version of PNR; responsive to a user request causing a selected one of the servers to modify the local context version of PNR performing the following actions:
checking on the shared context storage area which server last updated the PNR; if the server which last updated the PNR is different from the selected server, obtaining the up to date version of PNR; modifying the local context version of PNR to satisfy the user request; updating the shared context storage area to reflect the last updated version of PNR.

The method according to a preferred embodiment of the present invention allows synchronizing the PNR values across a multi-server (possibly multiplatform) system with an efficient and consistent mechanism. The mechanism addresses the consistency and performance issues thanks to its versioning and its lazy behaviour (the synchronization occurs only when required). It can be used as a solution during a migration phase from one system to another with progressive migration of applications sharing data, and also as a permanent solution for distributed applications across different platforms.

According to a second aspect of the present invention there is provided a system comprising one or more components adapted to perform the method described above.

According to a further embodiment of the present invention there is provided a computer program comprising instructions for carrying out the method described above when said computer program is executed on a computer system.

### Brief description of drawings

Reference will now be made, by way of example, to the accompanying drawings, in which:
Figure 1 is a diagram of the inventory system in accordance with one embodiment of the present invention;
Figure 2 schematically shows a possible structure of a Distributed Context Correlator used in a preferred embodiment of the present invention;
Figure 3 shows a request processing on different platforms with the associated change of values in the shared context with a use-case formalism;
Figure 4 is a diagram of a general computer system adapted to support the method of a preferred embodiment of the present invention;
Figures 5 to 9 (a and b) show the five services of Distributed Context Synchronization with an EDIFACT structure (a-figure) and a use-case diagram (b-figure), according to a preferred embodiment of the present invention;
Figure 10 is a flow chart of the method steps of a process, in accordance with one embodiment of the present invention.

### Detailed description of the embodiments

The example on which the present description is based is the migration from a complex TPF architecture for a reservation system to an Open System architecture. For many reasons, as mentioned above, it is not desirable to make the migration in one single move. Therefore for a transition period (which could last several months or years) the reservation system is distributed among mainframe, E.G. TPF or MVS systems of International Business Corporation and open platform, e.g. Unix or Linux systems. The reservation system could be implemented e.g. on an Amadeus infrastructure. However the present invention is applicable to any implementation of a reservation system which works across multiple servers with different platforms.

In the example of the migration from mainframe to Open platform, on the TPF mainframe the PNR applications share the same PNR context in memory and can access the data directly via an API in read and/or write mode. Because of the TPF reengineering and the migration of PNR applications out of the TPF mainframe, the problem of PNR context sharing between different platforms appeared. Indeed, we have a concept of a single system with shared user context across heterogeneous platforms which require applications distributed on different platforms to have access to the same PNR data to ensure the consistency of business functionality actions performed across platforms.

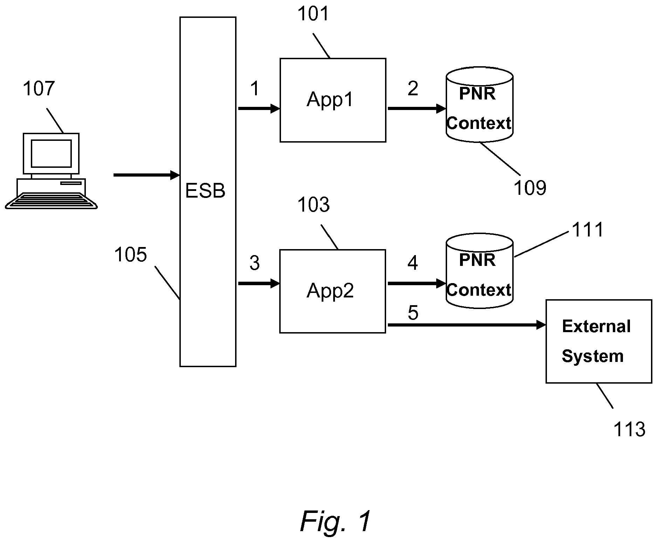

An example with 2 applications, one being dependent on the PNR information provided by the other, is represented on the diagram of Figure 1. It shows that both local PNR contexts have to be synchronized in order to be able to perform the business functionalities. Two applications (App1 and App2) cooperate in a reservation system: App1 (just to make an example a Reservation Application) runs on a system 101, while App2 (e.g. a Pricing Application) runs on a system 103. System 101 in our example is a TPF mainframe, while system 103 is an Open System, e.g. a Unix system. More generally the two systems 101 and 103 can be any known system on two different platforms. The two systems 101 and 103 are connected each other by means of an Enterprise Service Bus (ESB) 105 which is also accessible by a user through a terminal 107. The connection between the terminal 107 and the ESB 105 can be done with any suitable network arrangement (e.g. TCP/IP). Also the ESB is an implementation example, but other known structures could be used instead, e.g. Router, a Portal or a Request Broker. Each system 101 and 103 has access to a local storage area (respectively 109 and 111) where PNR information is maintained. The local PNR information will be the most up-to-date for the local system, but it could be out of date with respect t to the other system. In the present embodiment we have used an example with two systems 101 and 103 working on two different platforms, but those skilled in the art will appreciate that other implementations are possible with several different systems. In the example of Figure 1 the user, through terminal 107 and ESB 105 requests (step 1) a reservation to App1 which works on a local version of PNR 109; the PNR is updated (step 2) according to elaboration made by App1. When the control is passed to App2 (step 3) the application works (step 4) on local version of PNR 111. Before doing that it is necessary to verify whether the local PNR is the most up to date version (in the present example it isn't), otherwise an updating is necessary. App2 can access External systems 113 (e.g. pricing databases) to complete its elaboration (step 5).

In the method and system according to a preferred embodiment of the present invention, a local in-memory copy of the PNR context is replicated on each platform; the updates are performed locally and the synchronization occurs when another platform needs to access the up-to-date context data. This is what we call distributed context synchronization. The complexity of the synchronization mechanism is to determine whether a local copy is out of date or not, and determine where is located the most up-to-date PNR data to get it. This mechanism works on all types of user queries whatever the protocol of communication and it is not dependent on the platform technical characteristics such as representation of data (e.g. big or little endian).

The present approach to PNR context synchronization answers all these requirements in an optimized way as the synchronization is performed only when it is needed, and provides only the updates to be done on the local context copy. A key element of the present invention is a mechanism to ensure that the most up to date value of a shared parameter is used at any time during the process. In the method and system according to a preferred embodiment of the present invention a distributed shared context correlator is used. As an example in the described Amadeus reservation system this is called DCX (Distributed context correlator). DCX conveys additional information on top of each message coming from the same user session, on all types of communication protocols to represent the distribution of the applicative contexts on the different platforms and applications.

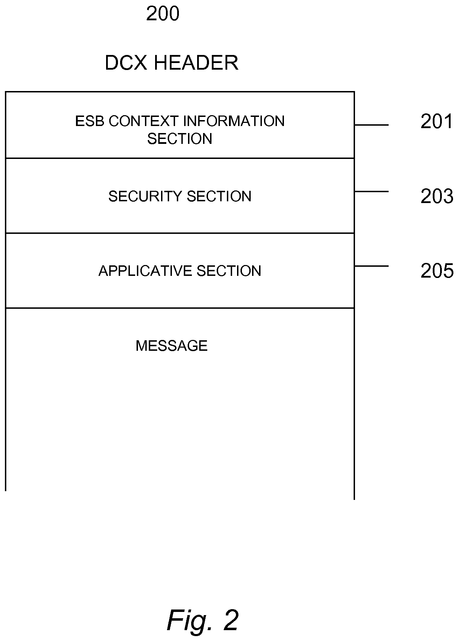

This DCX entity is created and stored on the ESB, and is conveyed on all messages within the Amadeus infrastructure in the session header. Figure 2 shows an example of DCX structure 200 according to a preferred embodiment of the present invention. It contains references to contexts on the different platforms, meaning it does not contain the context data themselves. It is formatted in XML and composed of 3 parts as shown in Figure 2: one reserved for ESB context information used for routing and other use-cases (201), another part is dedicated to security and user authentication (203), and finally the third part is the applicative part (205) where application can add their context references and status indicators associated to them. It is in the applicative part that the Context Synchronization process stores the information related to the distributed PNR contexts, and it is the basis of the mechanism without which it would not be working.

The DCX offers two other features required for the synchronization mechanism which are the affinity and the context sharing between different communication protocols. The affinity is required to target the exact same application server each time the same service is invoked and it is needed as the PNR contexts are local to application servers. Preferably, the information related to affinity is comprised in keys, which can be referred to as "Affinity Keys", said keys being comprised in the DCX. The sharing of context information across protocols is required to ensure that a user invoking PNR services on different protocols will still be working on the exact same PNR context.

The lifetime duration of the context is controlled by the established conversations between the ESB and the open system (or the mainframe). The DCX offers a global view of the user activity meaning that if the user works through one specific conversation (for instance EDIFACT conversation), the other protocol conversations will be maintained to ensure consistency across protocols. When the user disconnects from the ESB (by a specific close of conversation or by an inactivity timeout), the conversations to the open systems and mainframe will be also closed and will trigger the clean-up of the contexts. A description of DCX is also available in co-pending applications "METHOD AND SYSTEM FOR PROVIDING A SESSION INVOLVING A PLURALITY OF SOFTWARE APPLICATIONS" and "METHOD AND SYSTEM FOR PROVIDING A SESSION IN A HETEROGENEOUS ENVIRONMENT" filed by the same applicant and having same priority date of the present invention.

In the examples of the present invention description the connections among servers are realised by means of an ESB, however those skilled in the art will appreciate that any other state of the art routing means, capable to route a transaction to an appropriate application server, could be used instead, e.g. a Router, a Portal or a Request Broker.

The distributed context synchronization mechanism use the applicative part of the shared context (DCX) entity to store information about the local context states on the different platforms, also referred to as machines or application servers. Each platform need to reference its local context and update the state at each transaction which implies a change of the context. The data related to the contexts are structured as follow:

| |
|---|
| ```
       <Application = SBR>
             <Platform, Context Version, Context Key, Context State>
       </Application>
``` |

All the platforms involved in the distributed PNR context synchronization will have their context keys stored in the DCX under the same application type (here named "SBR").

The field "Platform" corresponds to the 3-letter acronym commonly used to design a system such as TPF or RES open system.

The field "Context Version" corresponds to the version of the context present on the associated platform, this is a number that is increased each time the context is modified.

The field "Context Key", also referred to as Applicative Context Key, corresponds to the unique identifier allowing the retrieval of the context on the associated platform.

The field "Context State" corresponds to the state of the context on the associated platform. The context state can represent the fact that the context is active, inactive, corrupted and if it was the last updated context.

An example of application keys in DCX, after 1 use-case processed on TPF and then 1 use-case processed on RES OBE (OPEN BACK END) could be:

```
 <Application = SBR>
       <TPF, 1, Key1, ACT>
       <RES, 1, Key2, ACT/Last>
 </Application>
```

The versioning of the local contexts is the key to implement a lazy synchronization mechanism (it is performed only when required) as we will see in the next chapter about the algorithm. The indicator of the "Last Updater" is also the key to determine which platform has the latest context, so that the synchronization is done with this platform.

In addition to the current status of the distributed PNR contexts which is conveyed inside the DCX entity on all messages, each platform has a local synchronization state stored associated to its context. This local synchronization state represents the state of the distributed PNR contexts on the other platforms at the time of the last performed synchronization. It allows to determine whether a local context is outdated compared to the other platforms, which is the triggering condition for synchronization. Indeed, if several successive updates have been done on one precise context, the synchronization will not be performed each time, as the local context will be up-to-date compared to other platform contexts.

The data structure described above is one of the possible alternatives, however other implementations can be realised to ensure the consistency of the different instances of the same shared parameter. The requirement of such data structure is that information about the location of the most up to date version of PNR can be shared among all applications across all the platforms used by the system.

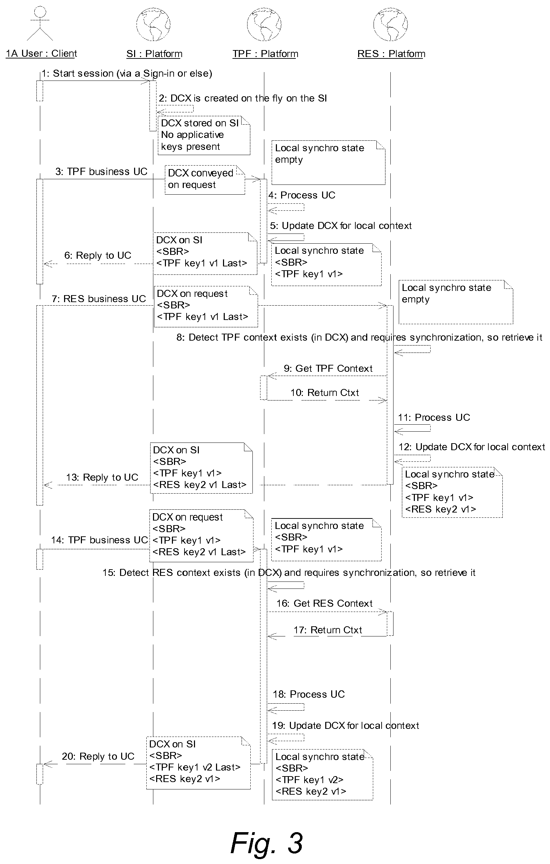

As shown in Figures 3, the global flows of modifications done on the applicative keys in the shared context (DCX in the current example) for the synchronization part are explained taking the example of 2 platforms called System1 and System2 (e.g. one running on mainframe and one on Open System). In the diagram of Figure 3 the processing of use-cases on different platforms with the associated change of values in the shared context is described. The current state conveyed in the shared context and the local synchronization states of the different platforms are represented in the diagram to show the difference between them.

In a first step (step1 on Figure 3), the user will log himself into the system via the ESB; at this stage an empty shared context will be created for his session and stored on the ESB (step2).

Then the user starts working, sending a business query that will be handled by a service located on the system1 (step3). The ESB will automatically convey the shared context with the user query to the system1. As system1 does not find synchronization information neither locally nor in the shared context, it processes directly the user query received (step4). In case a reservation context has been created by the processing of the query, the local synchronization data are updated with the new state which is that system1 has got a reservation context in version 1 and was the last updater for it (step5). The business reply is then sent back to the user, along with the shared context updated with synchronization data; the shared context is stored on the ESB before forwarding the reply to the user so that it can be used on the next queries performed by the user (step6). The user sends afterwards another business query that will be handled by a service located on the system2 (step7). The ESB will automatically convey the shared context with the user query to the system2. On the system2 there is no local synchronization state stored, and a comparison with the synchronization data present in the shared context received with the query shows that synchronization is required with System1 as it holds a new reservation context (step8). So System2 will ask to System1 its reservation context (step9) to store it locally and allow the processing of the user query (step10). Along with the storage of the reservation context, the local synchronization state is initialized with the different applicative keys representing the situation. Then the processing of the query takes place (step11); once it is completed, in case the reservation context has been updated the local synchronization is updated to represent that fact that the system2 is now the last updater of the reservation information, and that its context now has the version 1 (step12). The business reply is sent back to the user, along with the shared context updated with synchronization data; the shared context is stored on the ESB before forwarding the reply to the user so that it can be used on the next queries performed by the user (step13).

It can continue with the same sequence of action with subsequent queries from the user, targeting either System1 or System2 indifferently. Depending on the comparison of the local synchronization state and the shared context, the system will determine whether synchronization is required or not.

On System1 platform for instance, when a service using the reservation context (e.g. PNR) in read or write mode is called, the following algorithm will be applied to determine whether synchronization with another system is required or not:
**0-** Receive the request
**1-** Get Application Keys in current shared context received on the user request (for instance System1 v1 / System2 v2 Last)
**2-** Get previous synchronization state stored locally (for instance System1 v1 / System2 v1 Last)
**3-** Run consistency check:
   3a- Is the current System1 version the same than the locally stored previous one? Is the key the same? (OK if YES)
   3b- Is the current System2 version greater or equal than the locally stored previous one? (OK if YES)
**4-** Run synchronization check: Is the current System2 version greater than the locally stored one, and "Last updater" flag present? (Synchro needed if YES)
**5-** If Synchro needed
   5a- Run the Synchronization (GET the context from System2 platform)
   5b- If successful, System1 updates the locally stored previous synchronization state with values: System1 v1 / System2 v2 (it means that now on System1 the context is synchronized with System2 v2)
**6-** Process business query on System1
**7-** Update System1 version if modifications done on reservation (PNR) context
   7a- Update System1 version in current shared context (System1 v2 Last / System2 v2). This shared context will be sent back to the ESB to keep it for next user queries
   7b- Update System1 version in locally stored previous synchronization state with values: System1 v2 / System2 v2
**8-** Answer

You can see in this algorithm that we need to compare 2 sets of context keys to be able to determine what has to be done from a synchronization point of view. The "last updater" flag is required when more than 2 platforms have PNR contexts, to determine the one that has the latest version of the context. For 2 platforms, the mechanism could work without it.

One additional advantage of this mechanism is that we are able to detect shared context transmission errors at the next synchronization phase. Indeed thanks to the consistency checks and to the locally stored synchronization information, it is possible to determine if an error occurred. The fact that version of the local platform does not match or the context keys are different, show a corruption of the shared context content and this is likely to be the consequence of an error. The error handling can be quite complex because of communications and collateral exchanges, so it won't be detailed here, but those skilled in the art will appreciate that several state of the art methods can be used to implement this task.

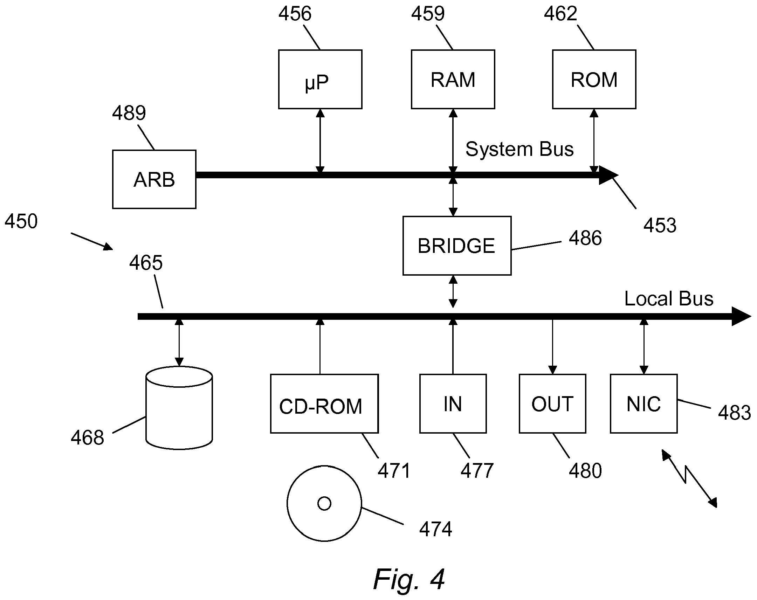

With reference to Figure 4 a generic computer of the system (e.g. any computer, Reservation server, TPF mainframe, Open System server, data base management subsystem, router, network server) is denoted with 450. The computer 450 is formed by several units that are connected in parallel to a system bus 453. In detail, one or more microprocessors 456 control operation of the computer 450; a RAM 459 is directly used as a working memory by the microprocessors 456, and a ROM 462 stores basic code for a bootstrap of the computer 450. Peripheral units are clustered around a local bus 465 (by means of respective interfaces). Particularly, a mass memory consists of a hard-disk 468 and a drive 471 for reading CD-ROMs 474. Moreover, the computer 450 includes input devices 477 (for example, a keyboard and a mouse), and output devices 480 (for example, a monitor and a printer). A Network Interface Card 483 is used to connect the computer 450 to the network. A bridge unit 486 interfaces the system bus 453 with the local bus 465. Each microprocessor 456 and the bridge unit 486 can operate as master agents requesting an access to the system bus 453 for transmitting information. An arbiter 489 manages the granting of the access with mutual exclusion to the system bus 453. Similar considerations apply if the system has a different topology, or it is based on other networks. Alternatively, the computers have a different structure, include equivalent units, or consist of other data processing entities (such as PDAs, mobile phones, and the like).

The EDIFACT services which are used in the PNR context synchronization mechanism and transporting the PNR data are composed of the following information:
- The local synchronization state of the platform requesting or providing the PNR context data. This information is required to determine the number of user transactions that have to be retrieved and applied on the local context. It also allows optimizations to reduce the amount of data exchanged between the platforms.
- The serialized PNR context, which can be complete in case of first synchronization or can be composed of context updates when the platform requesting the latest version of context already had a local context copy. The serialized context is a PASBCQ which is an EDI message itself.

The fact that the context is serialized into an EDI message allows getting rid of the data representation specificities of the platform providing it. Indeed, the data content is standardized and independent from platform data representation.

The Distributed Context Synchronization is based on 5 different services which can either be implemented on both platforms TPF and OBE or be specific to a master/slave platform.
Each service will convey the DCX along with the message, especially because the DCX will allow the consistency checks to be run on the state of the context synchronization. Each service is here described with reference to an EDIFACT structure (request and response) and a use case diagram to shoe exchanged data

### GET context: PCSGRQ/R

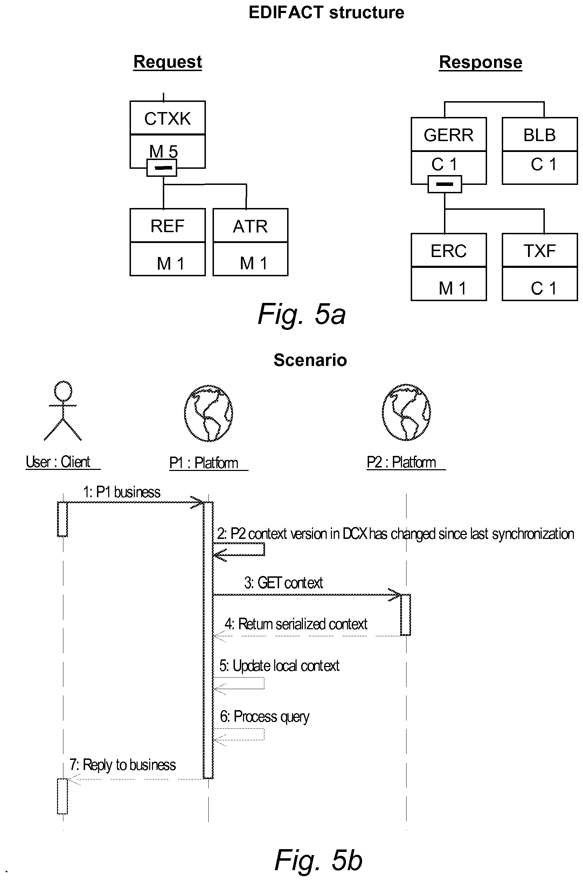

This service, as shown in Figures 5a and 5b is used to retrieve from a remote platform the latest version of its context. It should be implemented on all platforms where the context can be read.

### Data exchanged

On the query, the client should give its synchronization state. It is composed of a list of 3 values <Platform, Context Key, Version>.

On the reply, the server should give its synchronization state associated to the serialized context with its versions. As errors can be encountered, the reply should contain an error group describing the problem.

### GET context serialization versions PCSVRQ/R

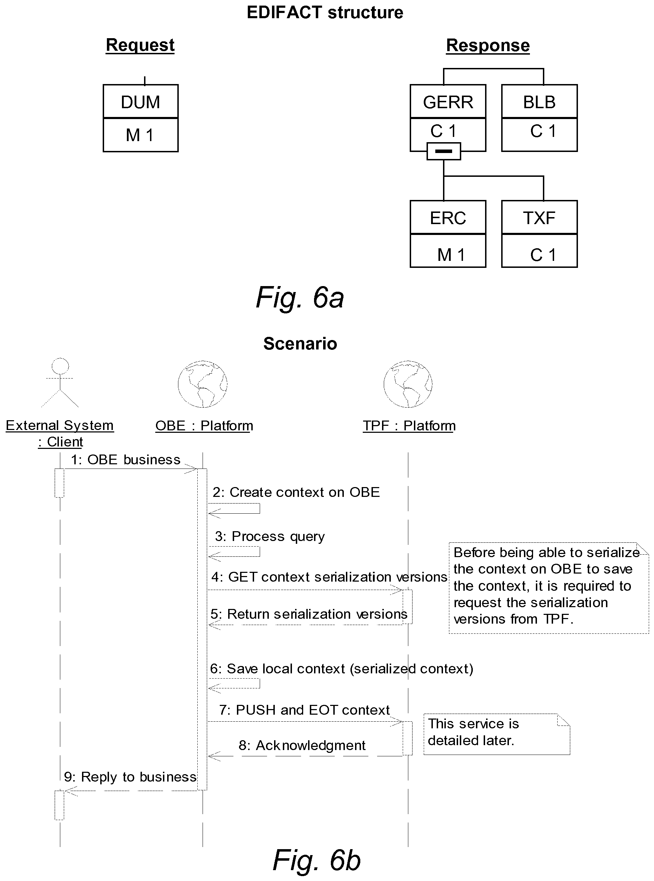

This service, shown in Figures 6a and 6b is used to retrieve all the versions related to the serialization of the context. This service should be implemented on OBE. On OBE, the context is based on a SBR Model, which is serialized into an EDIFACT message called PASBCQ. The PASBCQ is composed of several blobs which have an associated version. As TPF is the master of the versions of PASBCQ, the OBE has to retrieve the current serialization versions from TPF when it does not know them already, to be able to write a consistent message. This situation occurs when external systems are requesting unsolicited updates directly on OBE.

### Data exchanged

On the query, the client should not need to provide any data.

On the reply, the server should give its versions used to serialize the PASBCQ EDIFACT message. It should be composed of a blob containing all the versions used to serialize, along with the blob version. As errors can be encountered, the reply should contain an error group describing the problem.

### PUSH context: PCSPUQ/R

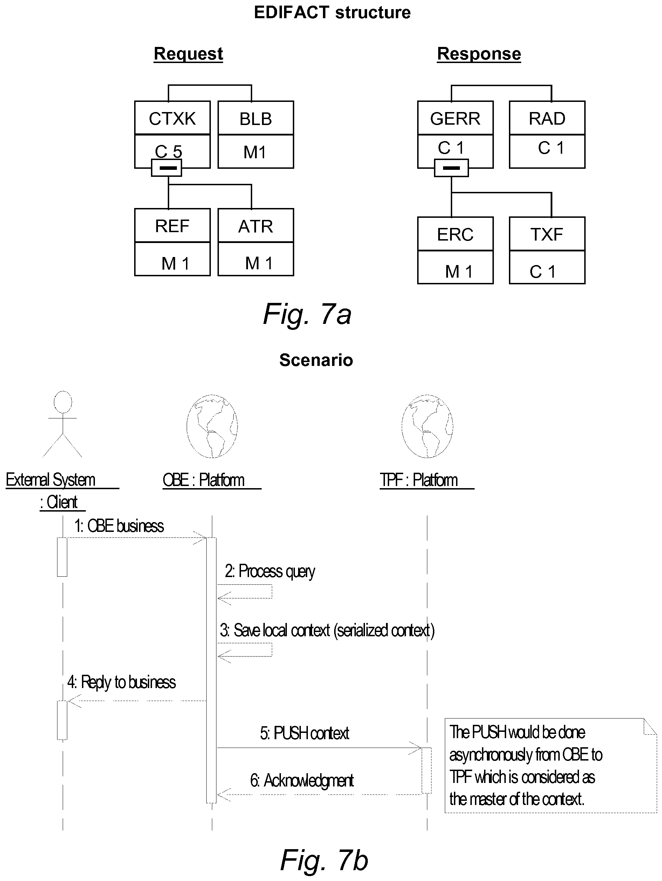

This service (see Figure 7a and 7b) is used to push the latest version of the local context to a remote platform in order to update the context on the latter. It should be implemented on platforms which are not master of the context. This service is an optimization of the synchronization mechanism to have the master of context up-to-date. In this case, the master would not use the GET context service. As on TPF the client calls are costly, this could help reducing resources consumption on it.

### Data exchanged

On the query, the client should provide its synchronization state associated to the serialized context with its versions.

On the reply, the server should only provide an acknowledgment. As errors can be encountered, the reply should contain an error group describing the problem.

### PUSH & EOT context: PCSEUQ/R

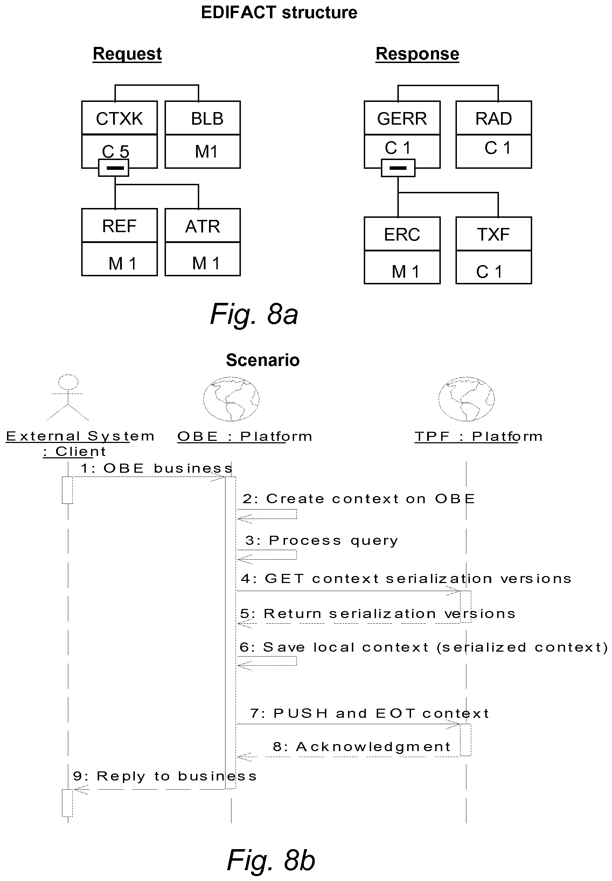

This service (Figure 8a and 8b) is used to push the latest version of the local context to a remote platform in order to update the context on the latter and call the End of Transaction process on this context. It should be implemented on all platforms which require updating the PNR context and calling the process End of Transaction on these modifications. This service is required to manage processing entries such Ticket Print Request (TTP) or Ticket Acknowledgment coming from an external system.

### Data exchanged

On the query, the client should provide its synchronization state associated to the serialized context with its versions.

On the reply, the server should only provide an acknowledgment. As errors can be encountered, the reply should contain an error group describing the problem.

### IGNORE context propagation: PCSINQ/R

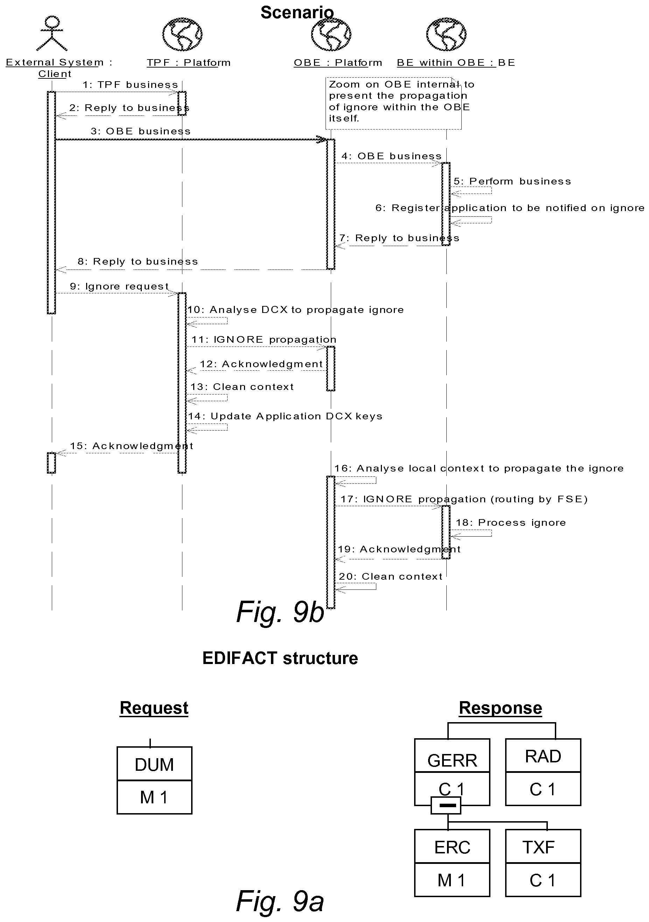

This service is used to ignore all the modifications that have been made on a SBR across the different platforms involved in the flows. TPF will receive the "IG" entry, and then it will propagate the query to the OBEs that have a SBR context registered in the DCX, so that they can clean their contexts. It is shown in Figures 9a and 9b.

### Data exchanged

On the query, the client should not need to provide any data.

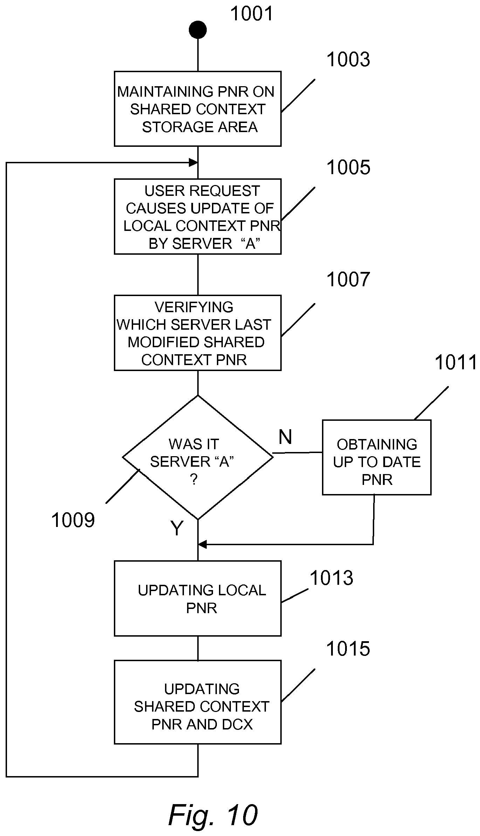

On the reply, the server should only provide an acknowledgment. As errors can be encountered, the reply should contain an error group describing the problem. The method described above is also represented in the diagram shown in figure 10. The method realizes a synchronization mechanism, in a reservation method operating on a multi-server system, for ensuring that the most up to date PNR record is used during a user transaction across at least two servers of the multi-server system, wherein a local context version of the PNR is maintained within each server of the multi server system, the servers being interconnected through a system bus. The method begins at black circle 1001 and then goes to box 1003 where the most up to date version of PNR is maintained in a storage area accessible by all servers involved in the transaction. A user request needing an updating action of the PNR is received by the multi-server reservation system (step 1005) e.g. at a server "A". The system bus (e.g. the ESB, but more generally any routing means) determines and select which server needs to be involved to process the request. At steps 1007 and 1009 the selected server checks whether the local context PNR is the most up to date by comparing the local context PNR with the information available on the shared context PNR on the ESB: if the local context PNR is not the most up to date (i.e. another server has modified the PNR since last update by the selected server (if any)) the selected server obtains the up to date version of PNR (step 1011). Then the selected server performs the requested activity and modifies the local context PNR (step 1013) which also becomes the up to date version: such information is then passed (step 1015) to the shared context PNR on ESB to be made available to all other servers of the multi-server system. The details of the way the information are transmitted among the servers, the ESB and the user have been discussed in the previous paragraphs.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the disclosure may be incorporated in any other embodiment as a general matter of design choice.

Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A synchronization method, in a reservation application operating on a multi-server system, the reservation application (101) exchanging travel related information by means of a Passenger Name Record data structure (PNR), for ensuring that the most up to date PNR is used during a user transaction across at least two servers of the multi-server system, wherein a local context version of the PNR is maintained within each server of the multi server system, the servers being interconnected through a routing means, the method including the steps of:
- maintaining in a shared context storage area (1003), accessible by all servers of the multi-server system, information on the location of the last modified version of PNR;
- responsive to a user request causing a selected one of the servers to modify the local context version of PNR performing the following actions:
- checking on the shared context storage area which server last modified the PNR;
- if the server which last modified the PNR is different from the selected server, obtaining the up to date version of PNR;
- modifying the local context version of PNR to satisfy the user request;
- updating the shared context storage area to reflect the last modified version of PNR.

2. The synchronization method of claim 1 wherein the servers of the multi-server system exchange information with the routing means and the user by means of a Service Oriented Architecture (SOA) system.

3. The synchronization method of claim 2 wherein the messages include a message header comprising information on the last modified version of PNR.

4. The synchronization method of any preceding claim wherein information on the last modified version of PNR includes a pointer to the last modified version of PNR.

5. The synchronization method of any preceding claim wherein the routing means includes a system bus, e.g. an Enterprise Service Bus (ESB).

6. A computer program comprising instructions for carrying out the steps of the method according to any preceding claim, when said computer program is executed on a computer.

7. A computer program product including computer readable means embodying the computer program of claim 6.

8. A reservation multi-server data processing system, including a synchronization method for ensuring that the most up to date PNR record is used during a user transaction across at least two servers of the multi-server system, wherein a local context version of the PNR is maintained (1003) within each server of the multi server system, the servers being interconnected through a routing means, wherein the system comprises one or more components adapted to perform the method of any claim 1 to 5.

9. A service deployed in a data processing system for implementing the method of any claim 1 to 5.

## Patentansprüche

1. Synchronisationsverfahren in einer Reservierungsanwendung, die auf einem Multiserversystem läuft, wobei die Reservierungsanwendung reisebezogene Informationen mittels einer Passenger-Name-Record-Datenstruktur (PNR) austauscht, um sicherzustellen, dass während einer Benutzer-Transaktion, an der wenigstens zwei Server des Multiserversystems beteiligt sind, der aktuellste PNR verwendet wird, wobei innerhalb jedes Servers des Multiserversystems eine lokale Kontextversion des PNR gepflegt wird und wobei die Server über ein Routingmittel miteinander verbunden sind, und das Verfahren die folgenden Schritte umfasst:
- Pflegen (1003), in einem gemeinsam genutzten Kontext-Speicherbereich, auf den alle Server des Multiserversystems zugreifen können, von Information über den Ort der zuletzt geänderten Version des PNR;
- in Reaktion auf eine Benutzeranfrage, Veranlassen, dass ein ausgewählter von den Servern die lokale Kontextversion des PNR ändert, wobei die folgenden Aktionen ausgeführt werden:
- Prüfen, auf dem gemeinsam genutzten Kontext-Speicherbereich, welcher Server den PNR zuletzt geändert hat;
- Einholen der aktuellen Version des PNR, falls der Server, der den PNR zuletzt geändert hat, verschieden vom ausgewählten Server ist;
- Ändern der lokalen Kontextversion des PNR, um die Benutzeranfrage zu befriedigen;
- Aktualisieren des gemeinsam genutzten Kontext-Speicherbereichs, um die zuletzt geänderte Version des PNR zu repräsentieren.

2. Synchronisationsverfahren nach Anspruch 1, wobei die Server des Multiserversystems Information mit dem Routingmittel und dem Benutzer mittels eines Service Oriented Architecture (SOA) Systems austauschen.

3. Synchronisationsverfahren nach Anspruch 2, wobei die Nachrichten einen Nachrichtenheader enthalten, der Information über die zuletzt geänderte Version des PNR umfasst.

4. Synchronisationsverfahren nach einem der vorhergehenden Ansprüche, wobei die Information über die zuletzt geänderte Version des PNR einen Zeiger auf die zuletzt geänderte Version des PNR umfasst.

5. Synchronisationsverfahren nach einem der vorhergehenden Ansprüche, wobei das Routingmittel einen Systembus umfasst, beispielsweise einen Enterprise Service Bus (ESB).

6. Computerprogramm, das Anweisungen umfasst, um die Schritte des Verfahrens nach einem der vorhergehenden Ansprüche auszuführen, wenn das Computerprogramm auf einem Computer ausgeführt wird.

7. Computerprogrammprodukt, das ein computerlesbares Mittel umfasst, das das Computerprogramm nach Anspruch 6 enthält.

8. Reservierungs-Multiserver-Datenverarbeitungssystem, das ein Synchronisationsverfahren umfasst, um sicherzustellen, dass während einer Benutzer-Transaktion, an der wenigstens zwei Server des Multiserversystems beteiligt sind, der aktuellste PNR-Datensatz verwendet wird, wobei innerhalb jedes Servers des Multiserversystems eine lokale Kontextversion des PNR gepflegt wird (1003) und wobei die Server über ein Routingmittel miteinander verbunden sind, wobei das System eine oder mehrere Komponenten umfasst, die dafür eingerichtet sind, das Verfahren nach einem der Ansprüche 1 bis 5 auszuführen.

9. Dienst, der in einem Datenverarbeitungssystem installiert ist, um das Verfahren nach einem der Ansprüche 1 bis 5 zu implementieren.

## Revendications

1. Méthode de synchronisation, dans une application de réservation fonctionnant sur un système de serveurs multiples, l'application de réservation (101) échangeant des informations relatives au voyage au moyen d'une structure de données de dossiers passagers (PNR), pour garantir que le PNR le plus à jour soit utilisé durant une transaction d'utilisateur sur au moins deux serveurs du système de serveurs multiples, dans lequel une version de contexte locale du PNR est maintenue dans chaque serveur du système de serveurs multiples, les serveurs étant interconnectés par le biais d'un moyen de routage, la méthode incluant les étapes suivantes :
- le maintien dans une zone de stockage de contexte partagée (1003), accessible par tous les serveurs du système de serveurs multiples, d'informations sur l'emplacement de la dernière version modifiée du PNR ;
- en réponse à une demande d'utilisateur amenant l'un sélectionné des serveurs à modifier la version de contexte locale du PNR en effectuant les actions suivantes :
- la vérification sur la zone de stockage de contexte partagée du serveur qui a modifié en dernier le PNR ;
- si le serveur qui a modifié en dernier le PNR est différent du serveur sélectionné, l'obtention d'une version à jour du PNR ;
- la modification de la version de contexte locale du PNR pour satisfaire la demande d'utilisateur ;
- la mise à jour de la zone de stockage de contexte partagée pour refléter la dernière version modifiée du PNR.

2. Méthode de synchronisation selon la revendication 1 dans laquelle les serveurs du système de serveurs multiples échangent des informations avec le moyen de routage et l'utilisateur au moyen d'un système d'architecture orientée services (SOA).

3. Méthode de synchronisation selon la revendication 2 dans laquelle les messages incluent un en-tête de message comprenant des informations sur la dernière version modifiée du PNR.

4. Méthode de synchronisation selon une quelconque revendication précédente dans laquelle des informations sur la dernière version modifiée du PNR incluent un pointeur sur la dernière version modifiée du PNR.

5. Méthode de synchronisation selon une quelconque revendication précédente dans laquelle le moyen de routage inclut un bus de système, par exemple un bus de services d'entreprise (ESB).

6. Programme informatique comprenant des instructions pour exécuter les étapes de la méthode selon une quelconque revendication précédente, quand ledit programme informatique est exécuté sur un ordinateur.

7. Produit de programme informatique incluant des moyens lisibles par ordinateur incorporant le programme informatique selon la revendication 6.

8. Système de traitement de données de serveurs multiples de réservation, incluant une méthode de synchronisation pour garantir que l'enregistrement de PNR le plus à jour soit utilisé durant une transaction d'utilisateur sur au moins deux serveurs du système de serveurs multiples, dans lequel une version de contexte locale du PNR est maintenue (1003) dans chaque serveur du système de serveurs multiples, les serveurs étant interconnectés par le biais d'un moyen de routage, dans lequel le système comprend un ou plusieurs composants adaptés pour effectuer la méthode selon l'une quelconque des revendications 1 à 5.

9. Service déployé dans un système de traitement de données pour mettre en oeuvre la méthode selon l'une quelconque des revendications 1 à 5.
